# EUROPEAN PATENT APPLICATION

(11) **EP 4 349 929 A1**
(43) Date of publication of application: **10.04.2024**
(21) Application number: 22815667.5
(22) Date of filing: 25.03.2022
(51) Int. Cl.: C09D 201/00, C09D 7/20, C09D 7/61, C09D 7/65

(54) **COATING COMPOSITION, COATING FILM, AND COATED ARTICLE**

(30) Priority: 31.05.2021 JP 2021090984
(71) Applicant: DAIKIN INDUSTRIES, LTD., Osaka-Shi, Osaka 530-0001 (JP)
(72) Inventor: SHIBATA, Ozora, Osaka-shi, Osaka 530-8323 (JP); KADOWAKI, Yu, Osaka-shi, Osaka 530-8323 (JP); NAKATANI, Yasukazu, Osaka-shi, Osaka 530-8323 (JP)
(74) Representative: Goddar, Heinz J.
(86) International application number: PCT/JP2022/014609
(87) International publication number: WO 2022/254910

(57) **Abstract**

Provided is a coating material composition that is more excellent in surface smoothness than conventional compositions and thereby is capable of forming a coating film excellent in sliding performance and sliding durability.

A coating material composition containing polytetrafluoroethylene, a binder resin, and a filler having a new Mohs hardness in a range of 1.0 to 6.0, in which the content of N-methyl-2-pyrrolidone is less than 1% by weight of the composition.

## Description

### Technical Field

The present disclosure relates to a coating material composition, a coating film, and a coated article.

### Background Art

Patent Literature 1 discloses a composition containing a polyamideimide resin, polytetrafluoroethylene, and an abrasion resistance-imparting agent having a Mohs hardness of 2.0 to 5.0.

Patent Literature 2 discloses a composition containing a polyamideimide resin, polytetrafluoroethylene, and 3-methoxy-N,N-dimethylpropanamide.

Patent Literature 3 discloses use of 3-methoxy-N,N-dimethylpropanamide as a solvent used for dissolving polyamideimide.

Patent Literature 4 discloses a composition containing a polyamideimide resin, polytetrafluoroethylene, and 3-methoxy-N,N-dimethylpropanamide.

### Citation List

### Patent Literature

Patent Literature 1: Japanese Patent Laid-Open No. 2008-261345
Patent Literature 2: Japanese Translation of PCT International Application Publication No. 2018-524440
Patent Literature 3: Japanese Patent Laid-Open No. 2020-15880
Patent Literature 4: Japanese Patent Laid-Open No. 2020-203243

### Summary of Invention

### Technical Problem

An object of the present disclosure is to provide a coating material composition that is more excellent in surface smoothness than conventional compositions and thereby is capable of forming a coating film excellent in sliding performance and sliding durability.

### Solution to Problem

The present disclosure is a coating material composition containing polytetrafluoroethylene, a binder resin, and a filler having a new Mohs hardness in a range of 1.0 to 6.0, wherein the content of N-methyl-2-pyrrolidone is less than 1% by weight of the composition.

The binder resin is preferably at least one kind selected from the group consisting of polyamideimide, polyethersulfone, polyetheretherketone, polyetherimide, and polyimide.

The coating material composition preferably contains at least one kind of solvent selected from the group consisting of N-ethyl-2-pyrrolidone, 3-methoxy-N,N-dimethylpropanamide, and N-butylpyrrolidone.

The filler is preferably at least one kind selected from the group consisting of graphite, calcium fluoride and iron oxide.

The above coating material composition is preferably for a sliding member of a compressor.

The present disclosure is also a coating film formed of the coating material composition described above.

The present disclosure is also a coated article having the aforementioned coating film.

### Advantageous Effects of Invention

The coating material composition of the present disclosure can form a coating film excellent in surface smoothness, thereby being capable of obtaining a coating film excellent in sliding performance and sliding durability.

### Description of Embodiments

The present disclosure will be described in detail below.

Conventionally, when a polyamideimide resin is used as a binder resin in a coating material composition, a polyamideimide resin that contains N-methyl-2-pyrrolidone as a solvent has been used. N-methyl-2-pyrrolidone is a resin having excellent solubility, which enables a suitable coating material composition to be obtained by using thereof.

In the coating material composition containing polytetrafluoroethylene, a binder resin, and a filler having a new Mohs hardness in a range of 1.0 to 6.0, improvement on sliding performance and sliding durability has been requested. In order to improve these performance, surface smoothness of a coating film is contemplated to be obtained.

The present inventors have found as a result of investigation for the improvement of surface smoothness that for a solvent to be used, N-methyl-2-pyrrolidone that is commonly used as a solvent, is preferably free. Namely, N-methyl-2-pyrrolidone with high surface tension cannot sufficiently wet the polytetrafluoroethylene resin and filler, whereby this was found to be one of the reasons for loss of surface smoothness. In other words, the inability of the solvent to wet a solid component sufficiently causes gas to be contained in a coating film, thereby causing reduction of smoothness.

In view of the above, the present disclosure is a coating material composition in which a content of N-methyl-2-pyrrolidone is less than 1% by weight of the composition. This enables achievement of the aforementioned object.

Each component contained in the coating material composition of the present disclosure will be described.

### (Polytetrafluoroethylene)

The polytetrafluoroethylene (hereinafter sometimes referred to as PTFE) is a polymer of tetrafluoroethylene. The PTFE may be a homo-PTFE containing only TFE units or a modified PTFE containing TFE units and modifying monomer units based on the modifying monomer that is copolymerizable with TFE. Moreover, the PTFE is preferably a low molecular weight PTFE that is melt-fabricable and non-fibrillatable. More specifically, the number-average molecular weight is preferably from 200,000 to 400,000.

The modifying monomer is not limited as long as it is copolymerizable with TFE, and examples thereof include perfluoro olefins such as hexafluoropropylene [HFP]; chlorofluoro olefins such as chlorotrifluoroethylene [CTFE]; hydrogen-containing fluoro olefins such as trifluoroethylene and vinylidene difluoride [VDF]; perfluoro vinyl ethers; perfluoroalkylethylenes; ethylene; and fluorine-containing vinyl ethers having nitrile groups. In addition, the modifying monomer for use may be one type thereof or a plurality of types thereof.

The perfluoro vinyl ether is not limited and examples thereof include an unsaturated perfluoro compound represented by the following formula (1)

CF₂=CF-ORf¹ (1)

wherein Rf¹ represents a perfluoro organic group. The "perfluoro organic group" herein refers to an organic group in which all hydrogen atoms bonded to carbon atoms are replaced with fluorine atoms. The perfluoro organic group may have an ether oxygen.

Examples of the perfluoro vinyl ether include a perfluoro(alkyl vinyl ether) [PAVE] in which Rf¹ represents a perfluoroalkyl group having 1 to 10 carbon atoms in formula (1). The number of carbon atoms of the perfluoroalkyl group is preferably 1 to 5.

Examples of the perfluoroalkyl group in PAVE include a perfluoromethyl group, a perfluoroethyl group, a perfluoropropyl group, a perfluorobutyl group, a perfluoropentyl group, and a perfluorohexyl group, and perfluoropropyl vinyl ether [PPVE] in which the perfluoroalkyl group is a perfluoropropyl group is preferred.

The modified PTFE preferably has a modifying monomer unit in a range of 0.001 to 2% by mole and more preferably 0.001 to 1% by mole.

The PTFE preferably has a melt viscosity (MV) of 1.0 × 10 Pa•s or more, more preferably 1.0 × 10² Pa•s or more, and still more preferably 1.0 × 10³ Pa•s or more.

The melt viscosity can be determined in accordance with ASTM D 1238, by using a flow tester (manufactured by Shimadzu Corporation) and a 2<p-8L die and measuring the melt viscosity of 2 g of a sample having been preliminarily heated for 5 minutes at the measurement temperature (380°C) under a load of 0.7 MPa while maintaining the temperature.

The PTFE preferably has a standard specific gravity (SSG) of 2.130 to 2.230, more preferably 2.140 or more, and more preferably 2.190 or less.

The standard specific gravity (SSG) herein can be measured based on a water displacement method, in accordance with ASTM D 4895-89.

The PTFE preferably has a melting point of 324 to 360°C. The melting point of the fluororesin herein is a value obtained as a temperature corresponding to the local maximum value in a heat-of-fusion curve when the temperature is increased at a rate of 10°C/minute by using a differential scanning calorimeter (DSC).

The PTFE also does not dissolve in a solvent and is present in the coating material composition in powder form, and thus PTFE having a small particle size as a raw material is preferably used. Specifically, PTFE having a primary particle size of 5 µm or less is preferably used. In is noted that a measurement method of the primary particle size is the same as that of a primary particle size of the filler, which will be described in detail below.

In the coating material composition of the present disclosure, the PTFE is preferably in an amount of 20 to 60% by mass relative to the total solid content of coating material composition. The PTFE in such a range is preferred in terms of enabling the sliding property of the coating film and adhesion to a substrate to be secured. The lower limit of the amount is more preferably 25% by mass and still more preferably 30% by mass. The upper limit of the amount is more preferably 55% by mass and still more preferably 50% by mass.

### (Binder resin)

The coating material composition of the present disclosure contains a binder resin. The binder resin is not limited, but is preferably a so-called super engineering plastic and specifically it is preferably at least one kind selected from the group consisting of polyamideimide, polyethersulfone, polyetheretherketone, polyetherimide, and polyimide. They will be described below.

### (Polyamideimide resin)

The polyamideimide resin is a resin typically obtained by a reaction of an acid component and a diisocyanate component, and has a structural moiety derived from the acid component and a structural moiety derived from the diisocyanate component.

### (Acid component)

The acid component is not limited and includes at least an aromatic tribasic acid anhydride and/or an aromatic tribasic acid halide. In one embodiment, the acid component preferably contains at least an aromatic tribasic acid anhydride, and more preferably contains trimellitic acid anhydride among them. Therefore, in one embodiment, the polyamideimide resin preferably has the structure represented by the following formula (I).

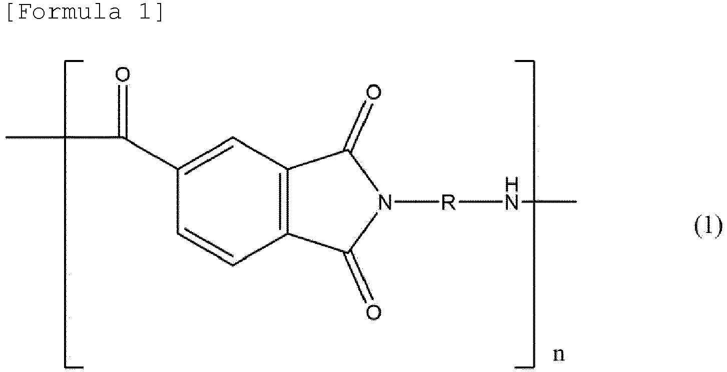

In the structure represented by formula (1), R is an organic group (structural moiety) derived from the diisocyanate component, and n is an integer of 1 or more.

The content of trimellitic anhydride is preferably 50% by mole or more based on the total amount (100% by mole) of acid components constituting the polyamideimide resin. In one embodiment, the content of the trimellitic anhydride may be 100% by mole.

In other embodiments, the content of trimellitic anhydride may be 50% by mole to 95% by mole, and 5% by mole to 50% by mole of other acid components may be contained based on the total amount (100% by mole) of acid components constituting the polyamideimide resin.

For example, a dicarboxylic acid may be used as the other acid component. As the dicarboxylic acid, for example, succinic acid, glutaric acid, adipic acid, pimelic acid, suberic acid, azelaic acid, sebacic acid, phthalic acid, isophthalic acid, and terephthalic acid may be used.

These compounds may also be used singly or in combinations of two or more thereof.

### (Diisocyanate component)

The diisocyanate component preferably contains at least an aromatic diisocyanate. Therefore, in one embodiment, R is preferably an organic group derived from the aromatic diisocyanate in formula (I). The content of the aromatic diisocyanate is preferably 30% by mole or more and more preferably 40% by mole or more based on the total amount (100% by mole) of diisocyanate components constituting the polyamideimide resin. In one embodiment, the content of the aromatic diisocyanate may be 100% by mole.

The aromatic diisocyanate contains one or more selected from the group consisting of 4,4'-diphenylmethane diisocyanate, 3,3'-dimethyl-4,4'-diisocyanatobiphenyl, 2,4-toluene diisocyanate, and 2,6-toluene diisocyanate. Among the aromatic diisocyanates, 4,4'-diphenylmethane diisocyanate is preferred.

Therefore, the content of the aromatic diisocyanate containing 4,4'-diphenylmethane diisocyanate is preferably 30% by mole or more, and more preferably 40% by mole or more, and may be 100% by mole, based on the total amount of diisocyanate components constituting the polyamideimide resin.

In one embodiment, the content of 4,4'-diphenylmethane diisocyanate, based on the total amount of diisocyanate components constituting the polyamideimide resin may be 100% by mole. In other embodiments, the content of 4,4'-diphenylmethane diisocyanate, based on the total amount of diisocyanate components constituting the polyamideimide resin, may be 30% by mole to 95% by mole, and the content of other aromatic diisocyanates may be 5% by mole to 70% by mole.

In the coating material composition of the present disclosure, the polyamideimide resin preferably has a number-average molecular weight of 5,000 to 50,000. Namely, the resin with such a relatively low molecular weight range is preferably used in order to obtain solubility for solvents that are substantially free of N-methyl-2-pyrrolidone. The lower limit of the number-average molecular weight is preferably 8,000, and more preferably 10,000 or more. The upper limit of the number-average molecular weight is preferably 40,000, and more preferably 30,000.

The number-average molecular weight of the polyamideimide resin herein is a value measured by a gel permeation chromatograph (GPC).

In the coating material composition of the present disclosure, the polyamideimide resin is preferably in an amount of 20 to 80% by mass relative to the total solid content of the coating material composition. The lower limit of the amount is more preferably 25% by mass. The upper limit of the amount is more preferably 77% by mass, and still more preferably 75% by mass.

### (Polyethersulfone resin)

The polyethersulfone resin (PES) is a resin composed of a polymer having a repeating unit represented by the following general formula:

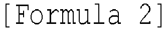

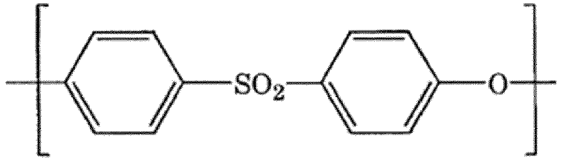

PES is not limited and examples thereof include a resin composed of a polymer obtained by polycondensation of dichlorodiphenylsulfone with bisphenol, and the like.

### (Polyetheretherketone resin)

The polyetheretherketone resin is a resin composed of a polymer having a repeating unit represented by the following general formula:

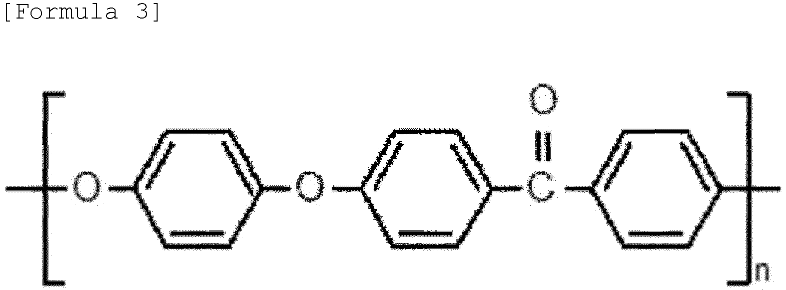

Such a resin that is a commercially available product, can be used.

### (Polyetherimide resin)

The polyetheretherketone resin is a resin composed of a polymer having a repeating unit represented by the following general formula: 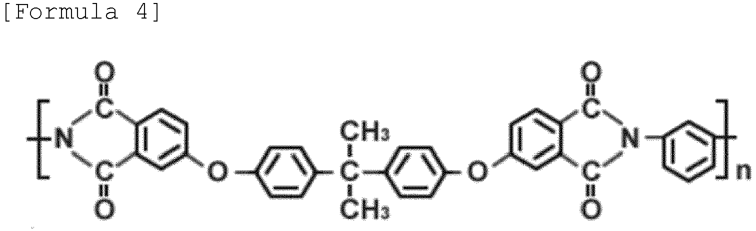 Such a resin that is a commercially available product, can be used.

### (Polyimide resin)

The polyimide resin is a resin composed of a polymer having an imide bond in its molecular structure. The polyimide resin described above is not limited, and examples thereof include a resin composed of a high molecular weight polymer obtained by reaction of an aromatic tetravalent carboxylic anhydride such as pyromellitic anhydride and a polyamine compound such as 4,4'-diaminodiphenyl ether, and the like. From the viewpoint of being excellent in heat resistance, the above polyimide resin is preferably a resin composed of a polymer having an aromatic ring in the main chain.

Among the above binder resins, the polyamideimide resin is particularly preferred in terms of hardness and substrate adhesion. The coating material composition of the present disclosure may be combined for use with two or more kinds of the aforementioned binder resins.

In the coating material composition of the present disclosure, the above binder resin is preferably from 20.0 to 80.0% by mass relative to the total solid content of the coating material composition. Satisfying such a range is preferred so as to ensure sliding of a coating film and adhesion to a substrate. The above lower limit is more preferably 25.0% by mass and further preferably 30.0% by mass.

The above upper limit is more preferably 77.0% by mass and further preferably 75.0% by mass.

### (Filler)

The present disclosure contains a filler. The filler having a hardness of from 1.0 to 6.0 on a new Mohs hardness scale is used.

Mohs hardness is a relative hardness of a substance evaluated on a scale which ranges from 1 to 10, while the new Mohs hardness is such that hardness is evaluated on a scale classified in more detail into 15 stages compared to a scale of 10 stages of Mohs hardness.

The filler having a hardness of from 1.0 to 6.0 on a new Mohs hardness scale is not limited and examples thereof include graphite (new Mohs hardness 2.0), calcium fluoride (new Mohs hardness 4.0), iron oxide (new Mohs hardness 6.0), boron nitride (new Mohs hardness 2.0), mica (new Mohs hardness 3.0), aluminum hydroxide (new Mohs hardness 3.0), calcium carbonate (new Mohs hardness 3.0), zinc oxide (new Mohs hardness from 4.0 to 5.0), tertiary calcium phosphate (new Mohs hardness 5.0), and the like. Among them, from the viewpoint of inhibiting abrasion of a mating member upon sliding, at least one kind selected from the group consisting of graphite, calcium fluoride, and iron oxide, is preferred.

Of these, two or more thereof may be combined for use.

The filler preferably has a primary particle size of D50 = from 0.1 to 30.0 µm. Within the aforementioned range of the primary particle size of the filler, the filler is preferable in terms of abrasion resistance. The above lower limit is more preferably D50 = 0.5 µm, and further preferably D50 = 1.0 µm. The above upper limit is more preferably D50 = 25.0 µm and further preferably D50 = 20.0 µm.

An average particle of the primary particles is measured as follows. First, particles in a field of view are photographed by using a transmission electron microscope or a scanning electron microscope. Then, the longest length (maximum length) of inner sizes of respective particles is determined for each of 300 primary particles constituting an aggregate on the two-dimensional image. The average value of the maximum lengths of the respective particles is defined as the average particle size of the primary particles.

The coating material composition of the present disclosure preferably contains the filler at a proportion of 0.1 to 50.0% by mass relative to 100 parts by mass of the solid content of the above binder resin in the coating material components. The content less than 0.1% by mass causes a problem in terms of reduction of the abrasion resistance. The content exceeding 50.0% by mass causes a problem in terms of deteriorating the sliding property of the surface of the coating film. The lower limit of the content is more preferably 0.5% by mass and still more preferably 1.0% by mass.

The upper limit of the content is more preferably 45.0% by mass and still more preferably 40.0% by mass.

### (Solvent)

In the coating material composition of the present disclosure, the content of N-methyl-2-pyrrolidone is less than 1% by weight of the composition. In other words, the low content of N-methyl-2-pyrrolidone provides the aforementioned effect. Therefore, the coating material composition may be such that N-methyl-2-pyrrolidone is entirely free.

The coating material composition of the present disclosure preferably contains an organic solvent that dissolves a binder resin instead of N-methyl-2-pyrrolidone. A solvent that dissolves the resin may be selected according to the type of binder resin. Specifically, examples of such a solvent include N-ethyl-2-pyrrolidone (NEP), 3-methoxy-N,N-dimethylpropanamide, and N-butyl-2-pyrrolidone (NBP). A mixture of two or more thereof may be used.

In the coating composition of the present disclosure, the solvent with the largest amount has a surface tension is preferably 37.5 or less. As described above, the high surface tension of N-methyl-2-pyrrolidone was one of the factors that loses surface smoothness in known coating material compositions. Therefore, using a solvent with low surface tension is conjectured to solve such a problem.

The surface tension is more preferably 37.0 or less and further preferably 36.5 or less. Note that the surface tension used herein is the value measured by the method described in Examples.

More specifically, the amount of solvent having a surface tension of 37.0 or less is preferably 25.0 weight % or more of the total volatile components contained in the coating material composition and further preferably 30.0 weight % or more.

The coating material composition of the present disclosure may be such that it combines for use with a solvent other than N-ethyl-2-pyrrolidone (NEP), 3-methoxy-N,N-dimethylpropanamide, and N-butyl-2-pyrrolidone (NBP). The solvent that can be combined for use is not limited and include general-purpose solvents such as toluene, xylene, methyl isopropyl ketone, methyl ethyl ketone, a glycol-based solvent, and an alcohol-based solvent. These general-purpose solvents are preferably contained at a proportion of from 10.0% to 75.0% by weight relative to the total amount of solvents.

The content of the solvent is not limited and can generally be 10.0 to 70.0% by mass relative to the total amount of coating material composition.

### (Viscosity)

The coating material composition of the present disclosure preferably has a viscosity of 100 to 40,000 cps. The viscosity within the range renders workability favorable in a coating step. Furthermore, it is also desirable in terms of obtaining a predetermined film thickness.

The viscosity described above is the value measured at 25°C using a B-type viscometer as described in JISZ8803. The above lower limit for a coating material used for spray painting and the like is more preferably 110 cps and further preferably 120 cps. The above upper limit is preferably 3,000 cps and further preferably 2,500 cps. The above lower limit for a coating material used for dispensers and roll coating is more preferably 4,000 cps and further preferably 5,000 cps. The upper limit of the viscosity is more preferably 38,000 cps and still more preferably 35,000 cps.

The viscosity can be set within the aforementioned range by appropriately adjusting the compositional features of the coating material composition, the amount of the solvent to be contained, a molecular weight of the component dissolved in the solvent among the resin to be used, and the like.

### (Other components)

The coating material composition of the present disclosure may contain other components in addition to the aforementioned components to the extent that does not impair the purpose of the present disclosure.

The coating material composition of the present disclosure may contain an epoxy resin. By compounding the epoxy resin, it may be possible to obtain an effect of being capable of obtaining a cross-linked product with the polyamideimide. The epoxy resin is not limited, and any known epoxy resin may be used. The amount to be compounded is not limited, and can be, for example, 10% by mass or less relative to the solid content mass of the polyamideimide.

### (Production method of coating material)

The coating material composition of the present disclosure can be produced by mixing the aforementioned components.

The aggregates can be appropriately pulverized by using various types of known mills such as a bead mill, a ball mill, and a three-roll, and these mills may be appropriately combined as necessary, and by adjusting crushing conditions, crushing time, and a compounding ratio of the resin components combined for use, or the like.

### (Coating film)

The coating film formed of the coating material composition of the present disclosure is an object of the present disclosure as well. The coating film can be formed by general methods.

The coating film of the present disclosure preferably has surface roughness Ra of 1.0 or less. Using the coating material composition of the present disclosure can form such a coating film. The above surface roughness Ra is preferably 0.8 or less and further preferably 0.7 or less.

The coating film of the present disclosure preferably has a coefficient of friction of 0.09 or less as measured by the method described in Examples herein. With such abrasion resistance, the coating film can be made to have an excellent strength and durability, and can be a coating film applicable for applications requiring sliding. It is noted that the coefficient of friction refers to the value measured by the method described in Examples. The above coefficient of friction is preferably 0.08 or less and further preferably 0.07 or less.

The coating film of the present disclosure preferably has sliding durability of 750 seconds or longer, as measured by the method described in Examples herein. The coating film of the present disclosure can be a coating film that can maintain the sliding over a long period of time, and a coating film applicable for applications requiring the sliding. Note that the sliding durability refers to the value measured by the method described in Examples. The sliding durability is more preferably 900 seconds or longer and further preferably 1,000 seconds or longer.

The coating film of the present disclosure is limited by the production method thereof. However, it is difficult and not in accordance with the actual situation to define the difference in structure or the like between the films formed as the coating films by using the coating material composition and those formed by other methods, in terms of a difference in film state. Therefore, it is to be stated just in case that the invention specified by limitations of such a production method is not unclarified.

### (Applications of coating material composition)

The coating material composition of the present disclosure has excellent frictional resistance and can be used as a coating material for sliding materials that can be used at high temperatures and high heating environments. Examples of more specific products include members for air conditioner compressor pistons, swash plates, and scroll compressors. In particular, a member for automobile air-conditioner compressor pistons is preferred. A substrate, a coating method, and the like for such applications can be employed based on known methods.

The present disclosure also is a coating film obtained by using the coating material composition described as well as a coated article having such a film.

### Examples

The present disclosure will be specifically described based on Examples below. It is noted that "%" and "parts" in the table refer to "% by mass" and "parts by mass," respectively.

### [Examples 1 to 9 and Comparative Examples 1 to 7]

Relative to a resin solid content of a polyamideimide varnish (a solid content concentration: approximately 34% by mass and a number-average molecular weight of polyamideimide: from 13,000 to 18,000)in which a binder resin was dissolved in any of 3-methoxy-N,N-dimethylpropanamide, N-methyl-2-pyrrolidone (NMP), and N-2-ethyl-2-pyrrolidone (NEP), polytetrafluoroethylene (PTFE, number-average molecular weight: from 200,000 to 400,000, melting point: from 300 to 330°C, specific gravity: from 2.0 to 2.3, melting viscosity: from 1.0 × 10³ to 1.0 × 10⁷ Pa·s) and a filler (D50: from 1 to 5 µm) were compounded in predetermined amounts and dispersed using a stirring mill to obtain the coating material.

The viscosity of each coating material was from 20,000 to 30,000 cps.

### (Coating method)

A substrate specimen of an aluminum plate was coated with the coating material composition of each of Examples 1 to 9 and Comparative Examples 1 to 7 described above using an applicator or a spray gun so that each film thickness upon firing was from 30 to 40 µm, fired at 100°C for 30 minutes and at 230°C for 30 minutes, respectively to form a coating film and thereby obtaining a test plate.

Evaluation was conducted based on the following criteria. The results are shown in Table 1.

### (Number-average molecular weight of polyamideimide)

The number-average molecular weight of polyamideimide was the value measured by gel permeation chromatography (GPC). GEL PERMEATION CHROMATOGRAPH HLC-8020 manufactured by Tosoh Corporation as an apparatus, a Shodex GPC KF-G (prefilter column) manufactured by Showa Denko K.K. as a column, and tetrahydrofuran as a solvent were used.

### (Number-average molecular weight of polytetrafluoroethylene)

By using a flow tester (manufactured by Shimadzu Corporation) in accordance with ASTM D 1238 and a 2φ-8L die, the number-average molecular weight was calculated from a melt viscosity of a 2 g sample that had been previously heated at 380°C for 5 minutes, measured at a load of 0.7 MPa.

### (Surface roughness)

The surface roughness was measured using a Surtoronic Duo manufactured by Sinto Scientific Co., Ltd., which was a contact-type surface roughness meter.

### (Coefficient of friction)

The coefficient of friction was measured using a Tribogear 38 manufactured by AMETEK Co., Ltd., which was a contact-type measurement instrument.

### (Sliding durability)

The sliding durability is measured by a ball-on-disk method. Specifically, a Friction Player FPR2200, manufactured by RHESCA CO., LTD. was used as a measurement apparatus, the coating film prepared with the coating material composition of the present invention was set in the measurement apparatus, a φ5mm-zirconia ball was used as a test piece counterpart, and measurement is conducted under the conditions of load: 1.0 kgf, rotation speed: 14 mm/sec, travel distance: 7 mm, and temperature: 150°C in a reciprocating sliding test.

### (Surface tension of solvent)

The surface tension was measured using a duNouy surface tension tester manufactured by ITO MFG. Co. Ltd.

**[Table 1]**

| | Coating material composition | | | | | | | Coating film properties | | |
|---|---|---|---|---|---|---|---|---|---|---|
| | Fluororesin | | Bind er | Filler | | Main solvent | | Surfac e roughn ess Ra (Prese nce or absenc e of bubble s) µm | Coefficient of friction | Sliding durability |
| | | (Solid content proport ion) | | | (New Mohs hardness) | | (Surface tension) | | | |
| | | | | | | | mN/m at 23°C | | | s |
| Example 1 | PT FE | 30 | PAI | Calcium fluoride | 4 | NEP | 35.1 | 0.6 | 0.06 | 1020 |
| Example 2 | PT FE | 20 | PAI | Calcium fluoride | 4 | NEP | 35.1 | 0.7 | 0.07 | 810 |
| Example 3 | PT FE | 50 | PAI | Calcium fluoride | 4 | 3-Methoxy-N,N-dimethylpropanamide | 34.2 | 1.0 | 0.07 | 1030 |
| Example 4 | PT FE | 50 | PAI | Calcium fluoride | 4 | 3-Methoxy-N,N-dimethylpropanamide | 34.2 | 0.8 | 0.06 | 1440 |
| Example 5 | PT FE | 45 | PAI | Calcium fluoride | 4 | 3-Methoxy-N,N-dimethylpropanamide | 34.2 | 0.6 | 0.04 | 1530 |
| Example 6 | PT FE | 40 | PAI | Calcium fluoride | 4 | 3-Methoxy-N,N-dimethylpropanamide | 34.2 | 0.7 | 0.04 | 1480 |
| Example 7 | PT FE | 35 | PAI | Calcium fluoride | 4 | 3-Methoxy-N,N-dimethylpropanamide | 34.2 | 0.6 | 0.06 | 1190 |
| Example 8 | PT FE | 30 | PAI | Calcium fluoride | 4 | 3-Methoxy-N,N-dimethylpropanamide | 34.2 | 0.7 | 0.06 | 1050 |
| Example 9 | PT FE | 28 | PAI | Calcium fluoride | 4 | 3-Methoxy-N,N-dimethylpropanamide | 34.2 | 0.7 | 0.08 | 930 |
| Example 10 | PT FE | 20 | PAI | Calcium fluoride | 4 | 3-Methoxy-N,N-dimethylpropanamide | 34.2 | 0.7 | 0.08 | 770 |
| Example 11 | PT FE | 30 | PAI | Graphite | 2 | NEP | 35.1 | 0.6 | 0.06 | 980 |
| Example 12 | PT FE | 30 | PAI | Iron oxide | 6 | 3-Methoxy-N,N-dimethylpropanamide | 34.2 | 0.6 | 0.06 | 1120 |
| Example 13 | PT FE | 30 | PAI | Talc | 1 | 3-Methoxy-N,N-dimethylpropanamide | 34.2 | 0.7 | 0.06 | 830 |
| Example 14 | PT FE | 30 | PES | Calcium fluoride | 4 | 3-Methoxy-N,N-dimethylpropanamide | 34.2 | 0.6 | 0.06 | 890 |
| Example 15 | PT FE | 30 | PEE K | Calcium fluoride | 4 | 3-Methoxy-N,N-dimethylpropanamide | 34.2 | 0.6 | 0.06 | 1080 |
| Example 16 | PT FE | 30 | PEI | Calcium fluoride | 4 | 3-Methoxy-N,N-dimethylpropanamide | 34.2 | 0.6 | 0.06 | 1010 |
| Example 17 | PT FE | 30 | PI | Calcium fluoride | 4 | 3-Methoxy-N,N-dimethylpropanamide | 34.2 | 0.6 | 0.06 | 950 |
| Comparative Example 1 | PT FE | 30 | PAI | Calcium fluoride | 4 | NMP | 38.6 | 1.4 | 0.11 | 410 |
| Comparative Example 2 | PT FE | 28 | PAI | Calcium fluoride | 4 | NMP | 38.6 | 1.2 | 0.1 | 440 |
| Comparative Example 3 | PT FE | 20 | PAI | Calcium fluoride | 4 | NMP | 38.6 | 0.6 | 0.08 | 720 |
| Comparative Example 4 | PT FE | 20 | PAI | Aluminum oxide | 9 | NMP | 38.6 | 0.7 | 0.09 | 560 |

From the results of Table 1 above, it is clear that the coating material composition of the present disclosure has high surface smoothness, thereby being capable of forming a coating film excellent in sliding performance and sliding durability.

### Industrial Applicability

The coating material composition of the present disclosure can be suitably used in coating of various sliding members, in particular those for air-conditioner compressor pistons, swash plates, and scroll compressors.

## Claims

1. A coating material composition comprising polytetrafluoroethylene, a binder resin, and a filler having a new Mohs hardness in a range of 1.0 to 6.0, wherein the content of N-methyl-2-pyrrolidone is less than 1% by weight of the composition.

2. The coating material composition according to claim 1, wherein the binder resin is at least one kind selected from the group consisting of polyamideimide, polyethersulfone, polyetheretherketone, polyetherimide, and polyimide.

3. The coating material composition according to claim 1 or 2, comprising at least one kind of solvent selected from the group consisting of N-ethyl-2-pyrrolidone, 3-methoxy-N,N-dimethylpropanamide, and N-butylpyrrolidone.

4. The coating material composition according to any of claims 1 to 3, wherein the filler is at least one kind selected from the group consisting of graphite, calcium fluoride and iron oxide.

5. The coating material composition according to any of claims 1 to 4, for a sliding member of a compressor.

6. A coating film formed of the coating material composition according to any of claims 1 to 5.

7. A coated article having the coating film according to claim 6.
